# EUROPÄISCHE PATENTSCHRIFT

(11) **EP 0 874 952 B1**
(45) Veröffentlichungstag und Bekanntmachung des Hinweises auf die Patenterteilung: **03.04.2002**
(21) Anmeldenummer: 97900987.5
(22) Anmeldetag: 10.01.1997
(51) Int. Cl.: F01P 7/16, F01P 11/00

(54) **KÜHLER EINES KRAFTFAHRZEUGMOTORS**
RADIATOR FOR A VEHICLE ENGINE
RADIATEUR POUR MOTEUR D'AUTOMOBILE

(30) Priorität: 16.01.1996 DE 19601319
(43) Veröffentlichungstag der Anmeldung: 04.11.1998
(73) Patentinhaber: WILO GmbH, D-44263 Dortmund (DE)
(72) Erfinder: GENSTER, Albert, D-45768 Marl (DE)
(74) Vertreter: COHAUSZ HANNIG DAWIDOWICZ & PARTNER
(86) Internationale Anmeldenummer: EP9700080
(87) Internationale Veröffentlichungsnummer: WO9726451

(56) Entgegenhaltungen:
- EP-A- 0 276 739
- EP-A- 0 584 850
- DE-A- 4 123 678
- DE-U- 9 419 818

## Beschreibung

Die Erfindung betrifft einen Kühlwasserkreislauf eines Verbrennungsmotors nach dem Oberbegriff des Anspruch 1.

Es ist bekannt, das Kühlwasser eines Verbrennungsmotors durch eine Pumpe umzuwälzen, die im Kreislauf zwischen dem Verbrennungsmotor und dem Kühler liegt und über einen Keilriemen oder einen Elektromotor angetrieben ist. Der Kühler besitzt einen Lüfter, der vom Verbrennungsmotor oder durch einen Elektromotor angetrieben wird. Die für die Motorkühlung notwendigen Vorrichtungen sind als separate Bauteile einzeln zu befestigen und erfordern einen erheblichen Platz im Motorraum eines Kraftfahrzeugs.

Im Kühlkreislauf befindet sich ein Thermostatventil, das nach dem Start des Verbrennungsmotors erst einmal geschlossen ist, um das Kühlwasser solange nicht durch den Kühler fließen zu lassen, bis es ausreichend warm ist. Hierdurch erreicht der Motor früher die erforderliche Arbeitstemperatur.

Ferner ist es bekannt, im Kühlkreislauf einen Latentwärmespeicher anzuordnen, der während des Betriebs des Kraftfahrzeugs Wärme speichert und diese Wärme auch nach dem Abstellen des Kraftfahrzeugs über längere Zeit behält. Wird der kalte Motor gestartet, so werden das Kühlwasser und der Motor durch den Latentwärmespeicher sofort aufgewärmt, so daß beim Kaltstart die Emissionen erheblich verringert werden und die Heizung früher wirksam ist. Auch ist es bekannt, im Kühlkreislauf eine Standheizung anzuordnen, die den Motor und den Fahrgastraum vor dem Start erwärmt. Ein solcher kreislauf ist aus der DE-A- 4 123 678 bekannt.

Nachteilig an den bekannten Anlagen ist, daß sie großen Einbauraum benötigen, der in modernen Fahrzeugen nicht zur Verfügung steht.

Aufgabe der Erfindung ist es, bei einem Verbrennungsmotor den Kühlwasserkreislauf so zu verbessern, daß eine kompakte Bauweise erreicht werden kann.

Diese Aufgabe wird erfindungsgemäß durch einen Kühlwasserkreislauf mit den kennzeichnenden Merkmalen des Anspruch 1 gelöst.

Die im Kühlkreislauf angeordnete Pumpe kann den Kühlkreislauf bereits vor dem Start des Verbrennungsmotors in Gang setzen und damit die Wärme des Latentwärmespeichers und/oder der Standheizung zum Motor und zum Heizungswärmetauscher transportieren. Hierdurch wird der Verbrennungsmotor vor dem Start aufgewärmt, so daß Emissionen verringert und seine Lebensdauer verlängert werden. Auch werden früher angenehme Temperaturen im Fahrgastraum erreicht und Fensterscheiben vor der Fahrt aufgetaut und entfeuchtet.

Dies wird bei einem geringen baulichen Aufwand und hoher Standfestigkeit erreicht. Geringe Außenabmessungen und eine einfache Montage werden erzielt, wenn die Spaltrohrmotorpumpe mit dem Kühler eine bauliche Einheit bildet. Hierbei liegt die Spaltrohrmotorpumpe im Kühler, insbesondere im Rücklauf- oder Vorlaufsammler des Kühlers vollständig mit ihrem Pumpengehause und dem Elektromotor.

Konstruktiv besonders einfach ist es, wenn der Lüfter des Kühlers und die Pumpe vom selben Elektromotor angetrieben sind. Auch ist es besonders vorteilhaft, wenn die Regelung der Spaltrohrmotorpumpe das Thermostatventil ersetzt.

Von Vorteil ist es, wenn die Pumpe noch vor dem Start des Verbrennungsmotors einschaltbar ist. Hierbei kann die Pumpe durch eine Fernbedienung und/oder Zeitschaltuhr einschaltbar sein. Alternativ oder zusätzlich kann die Pumpe durch Entriegelung einer Kraftfahrzeug-Zentralverriegelung einschaltbar sein.

Zwei Ausführungsbeispiele der Erfindung sind in den Zeichnungen schematisch dargestellt und werden im folgenden näher beschrieben, wobei der Kühler mit den dazugehörigen Aggregaten jeweils eine Baueinheit bildet, deren Einzelteile durch einen gestrichelten Rahmen umfaßt ist, wobei die einzelnen Teile der Baueinheit aus Gründen der zeichnerischen Übersicht teilweise mit Abstand zueinander dargestellt sind, obwohl sie eng aneinander befestigt sind.

Es zeigen
- Figur 1:: einen Kühlwasserkreislauf mit einem Latentwärmespeicher,
- Figur 2:: einen Kühlwasserkreislauf mit einer Standheizung und
- Figur 3:: fünf Schaltungsanordnungen.

Ein Verbrennungsmotor 1 weist einen Kühlwasserkreislauf 1a auf, in dem ein Kühler 2 angeschlossen ist, wobei der Kühler einen Sammelbehälter 2b als Sammlervorlauf und einen Sammelbehälter 2a als Sammlerrücklauf besitzt. Parallel zum Verbrennungsmotor ist im Kreislauf noch ei Heizungswärmetauscher 10 angeschlossen, um das Innere des Fahrgastraumes zu erwärmen.

Der Kühlkreislauf wird durch eine Elektromotorkreiselpumpe in Spaltrohrbauweise angetrieben, deren Pumpengehäuse 3 innerhalb des Sammelbehälters 2a angeordnet ist. Hierbei kann das Gehäuse der Pumpe vom Kühler, insbesondere vom Material des Sammelbehälters gebildet sein, so daß Pumpengehäuse und Sammelbehälter einteilig sind.

Der Elektromotor 4 der Pumpe und/oder des Lüfters soll innerhalb des Sammelbehalters 2b angeordnet sein, wodurch die Außenabmessungen der gesamten Baueinheit weiter verringert werden.

An der Außenseite der Kühlrippen des Kühlers 2 ist ein Lüfter 5 angeordnet, dessen Elektromotor 6 dem Kühler 2 abgewandt ist.

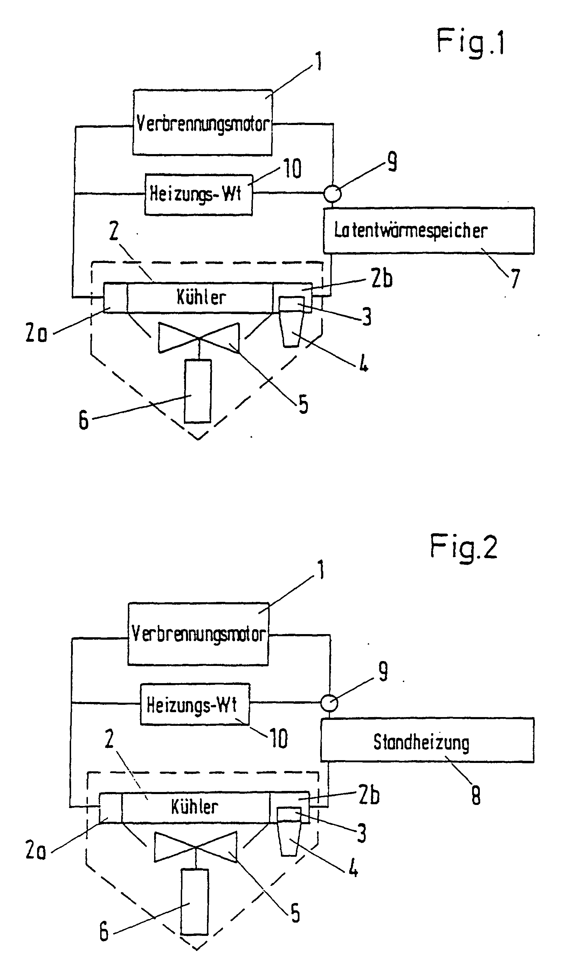

Im Kühlwasserkreislauf ist ein Latentwärmespeicher 7 (Fig. 1) und/oder eine Standheizung 8 (Fig. 2) zwischen Verbrennungsmotor und Kühler angeschlossen, durch die das Kühlwasser zur Erwärmung fließt, wobei das Kühlwasser durch die Motorpumpe 3, 4 bewegt wird. Der Elektromotor 4 der Pumpe 3 wird entsprechend den Kühl- und Wärmeanforderungen in seiner Drehzahl elektronisch gesteuert, wobei Temperatursensoren, die sich am Verbrennungsmotor und am Latentwärmespeicher/an der Standheizung befinden, die Temperatur vom Kühlmedium bzw. von Bauteilen erfassen. Hierdurch ersetzt die Regelung der Spaltrohrmotorpumpe das Thermostatventil. Die Pumpe ist noch vor dem Start des Verbrennungsmotors durch eine Fernbedienung und/oder Zeitschaltuhr und alternativ oder zusätzlich durch Entriegelung einer Kraftfahrzeug-Zentralverriegelung einschaltbar.

In den Ausführungsbeispielen nach Fig. 1, und Fig. 2 ist im Kreislauf zwischen dem Verbrennungsmotor, dem Wärmetauscher 10, der Heizung und dem Kühler ein Ventil 9 eingebaut, das u.a. den Zufluß zum Heizungswärmetauscher steuert. Dieses Ventil kann fehlen, wenn die Heizung über eine Lüftungsklappe geregelt wird.

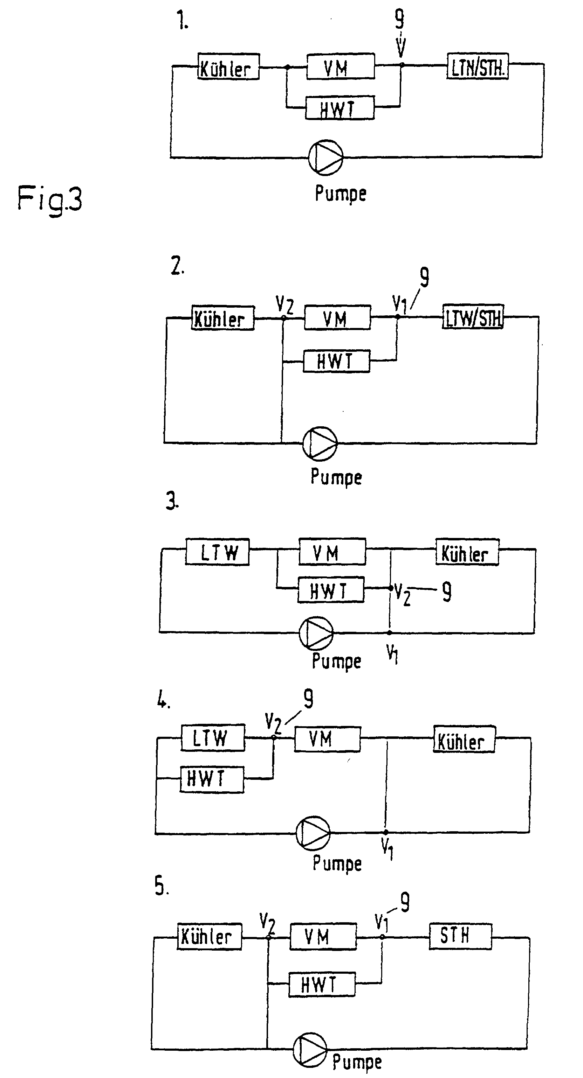

Figur 1 und Figur 2 stellen nur Anordnungsbeispiele dar (Schaltungsart 1). Die Anordnung von Latentwärmespeicher/Standheizung kann auch andere Positionen einnehmen. Weitere Schaltungsarten sind in Figur 3 unter 2. bis 5. dargestellt. Hierbei bedeuten: VM= Verbrennungsmotor, LTW= Latentwärmespeicher oder Standheizung, HWT= Heizungswärmetauscher.

## Patentansprüche

1. Kühlwasserkreislauf eines Verbrennungsmotors (1), insbesondere eines Kraftfahrzeuges, umfassend einen Kühler (2), eine von einem Elektromotor betriebene Pumpe (3) und einen Latentwärmespeicher (7) und/oder eine Standheizung (8), wobei die Drehzahl der Pumpe (3) entsprechend an dem Latentwärmespeicher (7), an der Standheizung (8) und/oder an dem Verbrennungsmotor (1) ermittelter Temperaturmeßdaten regelbar ist,
**dadurch gekennzeichnet, daß** die das Kühlwasser umwälzende Pumpe (3) eine Spaltrohrpumpe ist, deren Pumpengehäuse und deren Elektromotor vollständig im Kühler einliegen.

2. Kühlwaserkreislauf nach Anspruch 1,
**dadurch gekennzeichnet, daß** Pumpengehäuse und Elektromotor der Pumpe im Rücklauf- oder Vorlaufsammler des Kühles angeordnet sind.

3. Kühlwasserkreislauf nach Anspruch 1,
**dadurch gekennzeichnet, daß** die Spaltrohrmotorpumpe (3) mit dem Kühler (2) eine bauliche Einheit bildet.

4. Kühlwasserkreislauf nach Anspruch 1 oder 2,
**dadurch gekennzeichnet, daß** der Lüfter (5) des Kühlers (2) und die Pumpe (3) vom selben Elektromotor angetrieben sind.

5. Kühlwasserkreislauf nach einem der vorherigen Ansprüche, **dadurch gekennzeichnet, daß** die Regelung der Spaltrohrmotorpumpe (3, 4) das Thermostatventil ersetzt.

6. Kühlwasserkreislauf nach einem der vorherigen Ansprüche, **dadurch gekennzeichnet, daß** die Pumpe (3, 4) noch vor dem Start des Verbrennungsmotors einschaltbar ist.

7. Kühlwasserkreislauf nach Anspruch 6,
**dadurch gekennzeichnet, daß** die Pumpe (3, 4) durch eine Fernbedienung und/oder Zeitschaltuhr einschaltbar ist.

8. Kühlwasserkreislauf nach Anspruch 6 oder 7,
**dadurch gekennzeichnet, daß** die Pumpe (3, 4) durch Entriegelung einer Kraftfahrzeug-Zentralverriegelung einschaltbar ist.

## Claims

1. A cooling water circuit of a combustion engine (1), in particular of a motor vehicle, consisting of a radiator (2), a pump (3) driven by an electric motor, and a latent heat accumulator (7) and/or a parking heater (8), whereby the speed of the pump (3) can be controlled in accordance with the temperature data measured at the latent heat accumulator (7), at the parking heater (8), and/or at the combustion engine (1), **characterized in that** the pump (3) circulating the cooling water is a canned motor pump, of which the pump housing and its electric motor lie fully within the radiator.

2. A cooling water circuit according to Claim 1, **charactarized in that** the pump housing and the electric motor of the pump are arranged in the outlet or the inlet collector of the radiator.

3. A cooling water circuit according to Claim 1, **characterized in that** the canned motor pump (3) forms a structural unit with the radiator (2).

4. A cooling water circuit according to claim 1 or 2, **characterized in that** the fan (5) of the radiator (2) and the pump (3) are driven by the same electric motor.

5. A cooling water circuit according to any of the preceding claims, **characterized in that** the control of the canned motor pump (3, 4) replaces the thermostat valve.

6. A cooling water circuit according to any of the preceding claims, **characterized in that** the pump (3, 4) can be activated even before the combustion engine is started.

7. A cooling water circuit according to Claim 6, **characterized in that** the pump (3, 4) can be activated by a remote control and/or a timer switch.

8. A cooling water circuit according to Claim 6 or 7, **characterized in that** the pump (3, 4) can be activated by unlocking of a motor vehicle central locking system.

## Revendications

1. Un circuit de refroidissement à eau d'un moteur (1) à combustion, en particulier dédié à un véhicule automobile, comportant un refroidisseur (2), une pompe (3) entrainée par un moteur électrique et un accumulateur (7) de chaleur latente et / ou un chauffage (8) en stationnement, cependant que la vitesse de rotation de la pompe (3) peut être régulée en fonction de valeurs de mesure de la température captées au niveau de l'accumulateur (7) de chaleur latente, du chauffage (8) en stationnement et / ou du moteur (1) à combustion, **caractérisé en ce que** la pompe (3) brassant l'eau de refroidissement est une pompe à moteur à gaine, dont le corps de pompe et dont le moteur électrique sont complètement immergés dans le refroidisseur.

2. Un circuit de refroidissement à eau conforme à la revendication n° 1, **caractérisé en ce que** le corps de pompe et le moteur électrique de la pompe sont disposés dans le collecteur de retour ou le collecteur d'alimentation du refroidisseur.

3. Un circuit de refroidissement à eau conforme à la revendication n° 1, **caractérisé en ce que** la pompe (3) à moteur à gaine constitue une unité constructive avec le refroidisseur (2).

4. Un circuit de refroidissement à eau conforme à une des revendications n° 1 ou n° 2, **caractérisé en ce que** le ventilateur (5) du refroidisseur (2) et la pompe (3) sont entraînés par le même moteur électrique.

5. Un circuit de refroidissement à eau conforme à une des revendications précédentes, **caractérisé en ce que** la régulation de la pompe (3, 4) à moteur à gaine remplace la valve à thermostat.

6. Un circuit de refroidissement à eau conforme à une des revendications précédentes, **caractérisé en ce que** la pompe (3, 4) peut être mise en marche même avant le démarrage du moteur à combustion.

7. Un circuit de refroidissement à eau conforme à la revendication n° 6, **caractérisé en ce que** la pompe (3, 4) peut être mise en marche à l'aide d'une télécommande et / ou d'une minuterie.

8. Un circuit de refroidissement à eau conforme à une des revendications n° 6 ou n° 7, **caractérisé en ce que** la pompe (3, 4) peut être mise en marche par le déverrouillage d'un verrouillage centralisé de véhicule automobile.
